# EUROPÄISCHE PATENTSCHRIFT

(11) **EP 0 574 796 B1**
(45) Veröffentlichungstag und Bekanntmachung des Hinweises auf die Patenterteilung: **07.05.1997**
(21) Anmeldenummer: 93109152.4
(22) Anmeldetag: 08.06.1993
(51) Int. Cl.: C08L 23/10, C08K 5/3415

(54) **Teilvernetzte Kunststoffmassen aus Propylenpolymerisaten und Bismaleinimidoverbindungen**
Partially cured polymer composition of propylene polymers and bismaleinimides
Matières plastiques réticulées partiellement à base de polymères de propylène et de bismaléinimides

(30) Priorität: 17.06.1992 DE 4219860; 17.06.1992 DE 4219884; 17.06.1992 DE 4219866; 17.06.1992 DE 4219865
(43) Veröffentlichungstag der Anmeldung: 22.12.1993
(73) Patentinhaber: BASF Aktiengesellschaft, 67063 Ludwigshafen (DE)
(72) Erfinder: Marczinke, Bernd Lothar, Dr., W-6720 Speyer (DE); Schwager, Harald, Dr., W-6720 Speyer (DE); Brosius, Sibylle, Dr., W-6700 Ludwigshafen (DE); Werner, Rainer Alexander, Dr., W-6702 Bad Duerkheim (DE); Scherer, Guenter, Dr., W-6731 Altdorf (DE); Kerth, Juergen, Dr., W-6719 Carlsberg (DE); Hungenberg, Klaus-Dieter, Dr., W-6943 Birkenau (DE); Hingmann, Roland, Dr., W-6802 Ladenburg (DE); Huber, Karl, W-6710 Frankenthal (DE)

(56) Entgegenhaltungen:
- EP-A- 0 338 860
- DE-A- 1 907 926
- GB-A- 1 264 855
- GB-A- 2 010 854
- DATABASE WPI Derwent Publications Ltd., London, GB; AN 83-761822 & JP-A-58 132 037 (MITSUI TOATSU) 6. August 1983
- DATABASE WPI Derwent Publications Ltd., London, GB; AN 73-71120U & JP-A-48 045 540 (SUMITOMO)
- DATABASE WPI Derwent Publications Ltd., London, GB; AN 90-372231 & JP-A-02 269 128 (MITSUI TOATSU) 2. November 1990
- DATABASE WPI Derwent Publications Ltd., London, GB; AN 83-33608K & JP-A-58 034 837 (SUMITOMO) 1. März 1983
- DATABASE WPI Derwent Publications Ltd., London, GB; AN 83-761822 & JP-A-58 132 037
- DATABASE WPI Derwent Publications Ltd., London, GB; AN 73-71120U & JP-A-48 045 540
- DATABASE WPI Derwent Publications Ltd., London, GB; AN 90-372231 & JP-A-02 269 128
- DATABASE WPI Derwent Publications Ltd., London, GB; AN 83-33608K & JP-A-58 034 837

## Beschreibung

Die vorliegende Erfindung betrifft teilvernetzte, glasfaserfreie Kunststoffmassen mit einem Schmelzflußindex von 0,1 bis 100 g/10 min., bei 230°C und unter einem Gewicht von 2,16 kg, aus
a) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist, und
b) einer Bismaleinimidoverbindung der allgemeinen Formel (I) 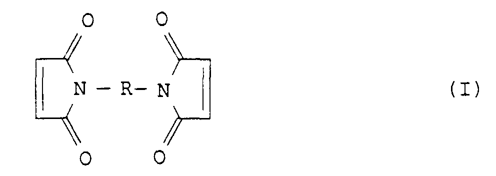 wobei R die folgende Bedeutung hat:
   C₁-C₂₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel (II)

   R¹-Z-R² (II)

   wobei R¹ und R² jeweils unabhängig voneinander für C₁-C₁₀-Alkyl-, C₅-C₇-Cycloalkyl- oder C₆-C₁₀-Arylreste stehen, die ihrerseits jeweils mit einer oder mehrerer C₁-C₁₀-Alkyl- und/oder C₁-C₆-Alkoxy- und/oder C₁-C₄-Dialkylaminogruppen substituiert sein können und Z eine C₁-C₁₀-Alkylgruppe, eine C₁-C₄-Dialkylaminogruppe, ein Sauerstoffatom oder eine Sulfongruppe bedeutet,
erhältlich durch Umsetzung des Polymerisats a) mit der Bismaleinimidoverbindung b) bei Temperaturen von 180 bis 280°C, Drücken von 1 bis 100 bar und mittleren Verweilzeiten des Reaktionsgemisches von 0,2 bis 10 Minuten.

Außerdem betrifft die vorliegende Erfindung ein Verfahren zur Herstellung von teilvernetzten Kunststoffmassen, sowie Folien und Formkörper aus diesen Kunststoffmassen.

Vernetzte Polymerisate weisen gegenüber nicht vernetzten Polymerisaten den Vorteil einer höheren mechanischen Stabilität auf. Vollständig vernetzte Materialien lassen sich aber aufgrund ihres geringen Schmelzflusses thermisch nicht mehr mit den in der Kunststofftechnik üblichen Methoden verformen (H.G. Elias, "Makromoleküle", Verlag Hüthig & Wepf, 4. Auflage, Seite 1 000 bis 1 003). Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können.

Es ist bekannt, daß Kautschuke auf der Basis von Ethylen und Propylen mittels Bismaleinimidoverbindungen vernetzt werden können, vorausgesetzt, daß radikalisch zerfallende Initiatoren (siehe z.B. Y.W. Chow, G.T. Knight: Gummi, Asbest, Kunstst. 31, 716ff (1978); P.O. Towney et al: J. Appln. Polym. Sci. 8, 2281ff (1964)) mitverwendet werden oder energiereiche Strahlung (siehe S.M. Miller et al: J. Polym. Sci. 58, 737 (1962)) die Reaktion initiiert. Dabei führt beispielsweise der Einsatz von Peroxiden zu einem Molmassenabbau, der die mechanischen Eigenschaften der Produkte deutlich verschlechtert.

Ferner ist es bekannt, Propylencopolymerisate mit Maleinsäurederivaten zu pfropfen und anschließend die gepfropften Verbindungen mit multifunktionellen Aminen umzusetzen (DE-OS 40 22 570).

Die so erhältlichen Produkte haben entweder saure oder basische Eigenschaften, was für manche technische Anwendungsgebiete nicht erwünscht ist. In der GB-A 20 10 854 werden Kunststoffmassen beschrieben, die Propylencopolymere und Bismaleinimidoverbindungen enthalten und im Extruder teilvernetzt werden. Die dabei eingesetzten Propylencopolymere enthalten stets noch Glasfasern.

Weiterhin sind in der JP-OS 269 128/90 Verfahren zum Thermoformen von Polypropylenfolien beschrieben, bei welchen Polymerisate aus Propylen, gegebenenfalls mit untergeordneten Anteilen von Ethylen, mit einem anorganischen Füller, einem Gleitmittel und einem Bismaleinimid umgesetzt werden. Die dabei verwendeten Materialien werden gemeinsam in einen Extruder eingeführt, ohne daß vorher die Polymerisate aus Propylen mit dem Bismaleinimid umgesetzt werden. Die dabei erhaltenen Folien lassen sich gut formen, sind aber hinsichtlich ihrer mechanischen Belastbarkeit noch verbesserungsfähig.

Der vorliegenden Erfindung lag daher die Aufgabe zugrunde, den geschilderten Nachteilen abzuhelfen und teilvernetzte Kunststoffmassen mit verbesserten anwendungstechnischen Eigenschaften zu entwickeln.

Demgemäß wurden die eingangs definierten, mit Bismaleinimidoverbindungen teilvernetzten, glasfaserfreien Kunststoffmassen gefunden.

Die erfindungsgemäßen teilvernetzten. glasfaserfreien Kunststoffmassen weisen einen Schmelzflußindex von 0,1 bis 100 g/10 min., bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Schmelzflußindex 0,1 bis 50 g/10 min, bei 230°C und unter einem Gewicht von 2,16 kg, beträgt.

Die erfindungsgemäßen teilvernetzten, glasfaserfreien Kunststoffmassen enthalten
ein Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist.

Als Polymerisat a) sind dabei solche Polymerisate bevorzugt, die 35 bis 95 Gew.-% eines Propylencopolymerisats (I) mit 0,2 bis 12 Gew.-% einpolymerisierter C₂-C₁₀-Alk-1-ene und 5 bis 65 Gew.-% eines Propylencopolymerisats (II) mit 20 bis 75 Gew.-% einpolymerisierter C₂-C₁₀-Alk-1-ene enthalten. Unter diesen Kunststoffmassen werden solche besonders bevorzugt eingesetzt, deren Polymerisat a) aus 40 bis 93 Gew.-% eines Propylencopolymerisats (I) mit 0,3 bis 9 Gew.-% einpolymerisierter C₂-C₁₀-Alk-1-ene und aus 7 bis 60 Gew.-% eines Propylencopolymerisats (II) mit 25 bis 70 Gew.-% einpolymerisierter C₂-C₁₀-Alk-1-ene besteht.

Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren sowohl in der Gasphase, als auch in einer Aufschlämmung oder in einer Lösung durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂ · aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m2/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, gnesiumdibromid und Magnesiumdi- (C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente in der Regel noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (III) 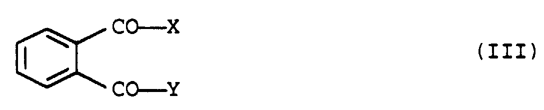 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂ · aAl₂O₃ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel (III) hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel (IV)

R³ ₙSi(OR⁴)₄₋ₙ (IV)

wobei R³ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R⁴ gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R³ eine C₁- bis C₈-Alkylgruppe oder eine 5- bis 7-gliedrige Cycloalkylgruppe, R⁴ eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan vorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, teilvernetzten Kunststoffmassen enthaltenen merisate a) hergestellt werden.

Zur Herstellung der Polymerisate a₁) wird dabei vorzugsweise zunächst in einer ersten Polymerisationsstufe das Propylencopolymerisat (I), und daran anschließend in einer zweiten Polymerisationsstufe das Propylencopolymerisat (II) produziert.

Die Copolymerisation des Propylens und der entsprechenden C₂-C₁₀-Alk-1-ene wird in der ersten Polymerisationsstufe üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind bei der Herstellung des Propylencopolymerisats (I) Drücke von 25 bis 35 bar, Temperaturen von 65 bis 85°C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylencopolymerisats (I) gebildet werden. Als C₂-C₁₀-Alk-1-en wird dabei insbesondere Ethylen und But-1-en, oder ein Gemisch aus diesen Comonomeren verwendet. Zur Herstellung des Propylencopolymerisats (I) wird das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird.

Das hierbei gebildete Propylencopolymerisat (I) wird nach Beendigung der Reaktion zusammen mit dem Katalysator aus der ersten Polymerisationsstufe ausgetragen und in die zweite Polymerisationsstufe eingeführt, wo das Propylencopolymerisat (II) hergestellt wird.

Dies erfolgt in der zweiten Polymerisationsstufe dadurch, daß in Anwesenheit des Propylencopolymerisats (I) Propylen zusammen mit einem oder mehreren C₂-C₁₀-Alk-1-enen bei Drücken von 5 bis 25 bar, Temperaturen von 30 bis 80°C und mittleren Verweilzeiten des Reaktionsgemisches von 1 bis 5 Stunden polymerisiert wird. Bevorzugt sind dabei Drücke von 10 bis 20 bar, Temperaturen von 40 bis 70°C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Copolymerisats (II) wird das Propylen mit den Comonomeren in der Weise copolymerisiert, daß das Verhältnis zwischen dem Partialdruck des Propylens und dem der Comonomeren auf 0,1:1 bis 20:1, insbesondere auf 0,2:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Weiterhin enthalten die erfindungsgemäßen, teilvernetzten Kunststoffmassen eine Bismaleinimidoverbindung b) der allgemeinen Formel (I), 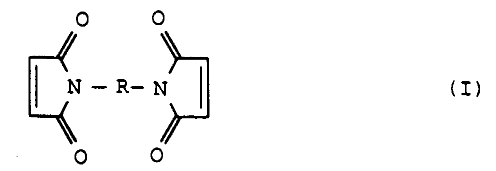 wobei R die folgende Bedeutung hat:
C₁-C₂₀-Alkyl, wobei der Alkylrest mit einem oder mehreren Sauerstoffatomen unterbrochen sein kann, C₅-C₇-Cycloalyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel (II)

R¹-Z-R² (II)

wobei R¹ und R² jeweils unabhängig voneinander für C₁-C₁₀-Alkyl-, C₅-C₇-Cycloalkyl- oder C₆-C₁₀-Arylreste stehen, die ihrerseits jeweils mit einer oder mehrerer C₁-C₁₀-Alkyl- und/oder C₁-C₆-Alkoxy- und/oder C₁-C₄-Dialkylaminogruppen substituiert sein können
und Z eine C₁-C₁₀-Alkylgruppe, eine C₁-C₄-Dialkylaminogruppe, ein Sauerstoffatom oder eine Sulfongruppe bedeutet.

Bevorzugt sind dabei solche Bismaleinimidoverbindungen der allgemeinen Formel (I), in der R die folgende Bedeutung hat:
C₂-C₁₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₄-Alkylgruppen substituiert sein kann, sowie einen Rest der Formel (II) R¹-Z-R², wobei R¹ und R² jeweils unabhängig voneinander für C₁-C₆-Alkyl-, C₅-C₇-Cycloalkyl- oder C₆-C₁₀-Arylreste stehen, und Z ein Sauerstoffatom oder eine Sulfongruppe bedeutet.

Als besonders bevorzugte Bismaleinimidoverbindungen werden insbesondere 1,6-Bismaleinimidohexan, 1,3-Bismaleinimidobenzol, 1,3-Bismaleinimido-4-methylbenzol, 4,4'-Bismaleinimidodiphenylmethan 4,4'-Bismaleinimido-3,5,3',5'-tetramethyldiphenylmethan und 3,3'-Bismaleinimidodiphenylsulfon eingesetzt.

Die Bismaleinimidoverbindungen können beispielsweise dadurch hergestellt werden, daß Maleinsäureanhydrid mit den entsprechenden Diaminen und anschließend mit Essigsäure und Natriumacetat umgesetzt wird. Derartige Herstellungsverfahren sind dem Fachmann bekannt.

Die erfindungsgemäßen, teilvernetzten, glasfaserfreien Kunststoffmassen sind erhältlich durch Umsetzung des Polymerisats a) mit der Bismaleinimidoverbindung b) bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drücke von 1 bis 60 bar und mittlere Verweilzeiten von 0,2 bis 5 Minuten. Die Umsetzung der einzelnen Komponenten miteinander erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

Die Umsetzung des Polymerisats a) mit der Bismaleinimidoverbindung b) zu den erfindungsgemäßen, teilvernetzten Kunststoffmassen kann sowohl in Abwesenheit, als auch in Anwesenheit eines radikalisch zerfallenden Initiators erfolgen.

Als radikalische Initiatoren werden vorzugsweise organische Peroxide oder Azoverbindungen eingesetzt. Bevorzugt werden dabei solche organischen Peroxidverbindungen verwendet, die bei einer Temperatur von 210°C Halbwertszeiten von 1 bis 30 Sekunden aufweisen. Innerhalb dieser Verbindungen sind insbesondere Dicumylperoxid, Monocumyl(tert.-butyl)-peroxid, Di(tert.-butyl)peroxid, 2,5-Dimethyl-2,5-di(tert.-butylperoxy)hexan und 2,5-Dimethyl-2,5-di(tert.-butylperoxy)hexin (3) hervorzuheben.

Zur Herstellung der erfindungsgemäßen, teilvernetzten Kunststoffmassen werden pro 100 Gew.-Teile des Polymerisats a) in der Regel 0,001 bis 5,0 Gew.-Teile der Bismaleinimidoverbindung b) und 0 bis 2,0 Gew.-Teile des radikalisch zerfallenden Initiators verwendet. Vorzugsweise werden pro 100 Gew.-Teile des Polymerisats a) 0,01 bis 2,0 Gew.-Teile, insbesondere 0,02 bis 1,0 Gew.-Teile der Bismaleinimidoverbindung b) und 0 bis 1,0 Gew.-Teile, insbesondere 0 bis 0,5 Gew.-Teile des radikalisch zerfallenden Initiators eingesetzt.

Die Umsetzung des Polymerisats a) mit der Bismaleinimidoverbindung b) erfolgt vorzugsweise in Extrudern, Insbesondere in Zweischneckenextrudern. In einer bevorzugten Ausführungsform dosiert man das Polymerisat a) zusammen mit der Bismaleinimidoverbindung b) sowie gegebenenfalls dem radikalisch zerfallenden Initiator in den Einzug eines Zweischneckenextruders, wo das Gemisch bei etwa 180 bis 190°C aufgeschmolzen und anschließend bei 180 bis 280°C 0,2 bis 10 Minuten lang zur Reaktion gebracht wird.

Die Bismaleinimidoverbindung b) sowie gegebenenfalls der radikalisch zerfallende Initiator können auch nach dem Aufschmelzen des Polymerisats a) in den Extruder gegeben werden.

Nach einem ebenfalls bevorzugten Herstellungsverfahren wird die Bismaleinimidoverbindung b) sowie gegebenenfalls der radikalisch zerfallende Initiator dem Polymerisat a) unmittelbar nach dessen Herstellung in einer, an den Herstellungsreaktor angeschlossenen Mischapparatur hinzugesetzt. Als Mischapparaturen werden dabei insbesondere Extruder verwendet.

Die erfindungsgemäßen teilvernetzten Kunststoffmassen zeichnen sich u.a. durch eine hohe mechanische Festigkeit, insbesondere durch eine hohe Steifigkeit, eine hohe Kerbschlagzähigkeit, eine gesteigerte Durchstoßfestigkeit, eine hohe Dehnverfestigung, sowie eine verbesserte Bindenahtfestigkeit aus. Im Gegensatz zu vollständig vernetzten Kunststoffen können die erfindungsgemäßen teilvernetzten Kunststoffmassen noch gut verarbeitet werden. Sie sind auf sehr einfache Weise erhältlich, da sowohl die Pfropfung als auch die sich daran anschließende teilweise Vernetzung in einem Herstellungsschritt durchgeführt werden können.

Die erfindungsgemäßen teilvernetzten Kunststoffmassen eignen sich aufgrund ihrer guten Verarbeitbarkeit insbesondere als Materialien für den Spritzguß, das Blasformen, die Extrusion und die Herstellung von Schäumen. Sie können dabei u.a. zur Herstellung von Folien und Formkörpern verwendet werden.

### Beispiele

In den Beispielen 1 bis 6 sowie den Vergleichsbeispielen A und B wurde jeweils eine Vorrichtung verwendet, die
- aus einer Kaskade von zwei verschiedenen, gerührten Autoklaven, die beide das gleiche Nutzvolumen von 200 l aufwiesen und jeweils mit einem bewegten Festbett aus feinteiligem Polypropylen gefüllt waren,
- sowie einem Zweischneckenextruder "ZSK 40" der Firma Werner & Pfleiderer mit einem Längen/Durchmesserverhältnis von 30 bestand. Der Extruder konnte bei einer Schneckendrehzahl von 100 bis 300 Umdrehungen betrieben werden.

In allen Beispielen 1 bis 6 sowie den Vergleichsbeispielen A und B wurde das in der Kaskade hergestellte Polymerisat a₁) mit der Bismaleinimidoverbindung b) sowie gegebenenfalls mit dem radikalisch zerfallenden Initiator im Zweischneckenextruder vermischt und anschließend über eine Granulierdüse als Strang ausgetragen. Die Vermischung erfolgte dabei bei einem durchschnittlichen Druck von 30 bar, einer Temperatur von 250°C, einer Schneckendrehzahl von etwa 150 Umdrehungen pro Minute und einer mittleren Verweilzeit des Reaktionsgemisches von etwa 1 Minute.

### Beispiel 1

Aus dem letzten Autoklaven der Kaskade wurde ein Polymerisat a₁) ausgetragen, welches aus 87 Gew.-% eines Propylen-Ethylen-Copolymerisats (I) mit 2,6 Gew.-% einpolymerisiertem Ethylen und 13 Gew.-% eines Propylen-Ethylen-Copolymerisats (II) mit 60 Gew.-% einpolymerisiertem Ethylen bestand und einen Schmelzflußindex von 1,3 g/10 min, bei 230°C und 2,16 kg, nach DIN 53 735 aufwies. 100 Gew.-Teile dieses Polymerisats a₁) wurden im Zweischneckenextruder mit 0,05 Gew.-Teilen 1,3-Bismaleinimidobenzol unter den oben angegebenen Bedingungen vermischt.

Die Eigenschaften der dabei erhaltenen teilvernetzten Kunststoffmasse sind in der nachfolgenden Tabelle I aufgeführt.

### Beispiel 2

100 Gew.-Teile des im Beispiel 1 verwendeten Polymerisats a₁) wurden unter den oben angegebenen Bedingungen mit 0,2 Gew.-Teilen 1,3-Bismaleinimidobenzol im Zweischneckenextruder umgesetzt.

Die Eigenschaften der dabei erhaltenen teilvernetzten Kunststoffmasse sind in der nachfolgenden Tabelle I aufgeführt.

### Beispiel 3

100 Gew.-Teile des im Beispiel 1 verwendeten Polymerisats a₁) wurden unter den oben genannten Bedingungen mit 0,2 Gew.-Teilen 1,3-Bismaleinimidobenzol in Gegenwart von 0,02 Gew.-Teilen 2,5-Dimethyl-2,5-di(tert.-butylperoxy)hexan im Zweischneckenextruder umgesetzt.

Die Eigenschaften der dabei erhaltenen teilvernetzten Kunststoffmasse sind in der nachfolgenden Tabelle I aufgeführt.

### Beispiel 4

100 Gew.-Teile des im Beispiel 1 verwendeten Polymerisats a₁) wurden unter den oben angegebenen Bedingungen mit 0,2 Gew.-Teilen 1,3-Bismaleinimidobenzol in Gegenwart von 0,08 Gew.-Teilen 2,5-Dimethyl-2,5-di(tert.-butylperoxy)hexan im Zweischneckenextruder umgesetzt.

Die Eigenschaften der dabei erhaltenen teilvernetzten Kunststoffmasse sind in der nachfolgenden Tabelle I aufgeführt.

### Beispiel 5

Aus dem letzten Autoklaven der Kaskade wurde ein Polymerisat a₁) ausgetragen, welches aus 57 Gew.-% eines Propylen-Ethylen-Copolymerisats (I) mit 3,9 Gew.-% einpolymerisiertem Ethylen und 43 Gew.-% eines Propylen-Ethylen-Copolymerisats (II) mit 60 Gew.-% einpolymerisiertem Ethylen bestand und einen Schmelzflußindex von 1,0 g/10 min, bei 230°C und 2,16 kg, nach DIN 53 735 aufwies. 100 Gew.-Teile dieses Polymerisats a) wurden im Zweischneckenextruder mit 0,2 Gew.-Teilen 1,3-Bismaleinimidobenzol unter den oben angegebenen Bedingungen vermischt.

Die Eigenschaften der dabei erhaltenen teilvernetzten Kunststoffmasse sind in der nachfolgenden Tabelle I aufgeführt.

### Beispiel 6

100 Gew.-Teile des im Beispiel 5 verwendeten Polymerisats a₁) wurden unter den oben angegebenen Bedingungen mit 0,4 Gew.-Teilen 1,3-Bismaleinimidobenzol im Zweischneckenextruder umgesetzt.

Die Eigenschaften der dabei erhaltenen teilvernetzten Kunststoffmasse sind in der nachfolgenden Tabelle I aufgeführt.

### Vergleichsbeispiel A

Analog dem Beispiel 1 wurden 100 Gew.-Teile des im Beispiel 1 verwendeten Polymerisats a₁) im Zweischneckenextruder granuliert, jedoch wurde auf die Zugabe einer Bismaleinimidoverbindung b) verzichtet.

Die Eigenschaften der dabei erhaltenen teilvernetzten Kunststoffmasse sind in der nachfolgenden Tabelle I aufgeführt.

### Vergleichsbeispiel B

Analog dem Beispiel 5 wurden 100 Gew.-Teile des im Beispiel 5 verwendeten Polymerisats a₁) im Zweischneckenextruder granuliert, jedoch wurde auf die Zugabe einer Bismaleinimidoverbindung b) verzichtet.

Die Eigenschaften der dabei erhaltenen teilvernetzten Kunststoffmasse sind in der nachfolgenden Tabelle I aufgeführt.

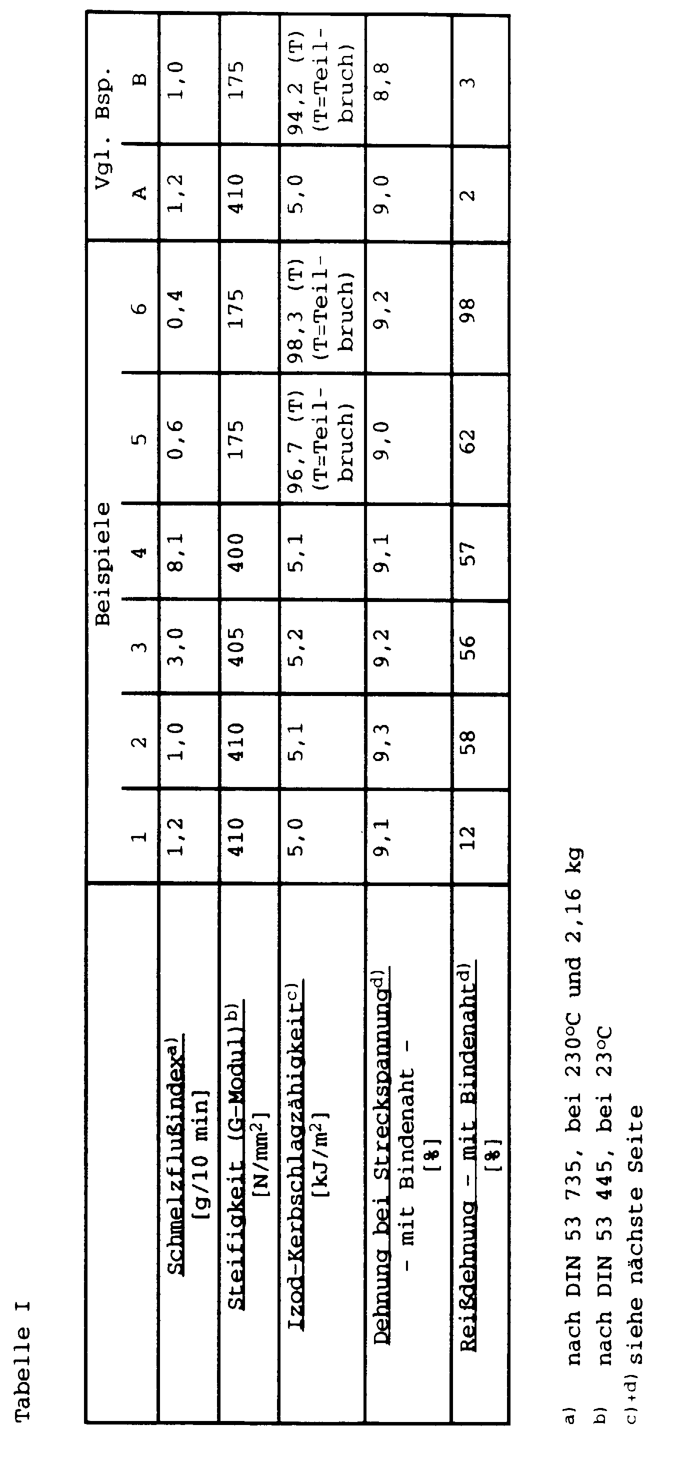

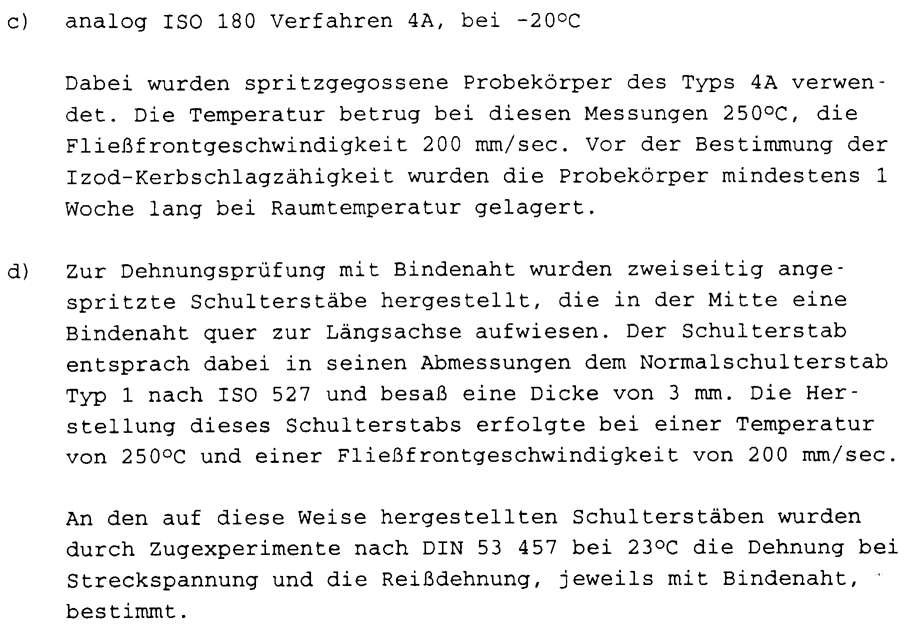

Die Kunststoffmassen der erfindungsgemäßen Beispiele 1 bis 6 zeichnen sich gegenüber den der Vergleichsbeispiele A und B insbesondere dadurch aus, daß ihre Werte für die Dehnung bei Streckspannung und die Reißdehnung erhöht sind.

Die Vergleichsbeispiele B', B", C, C' und D wurden in einem Zweischneckenextruder der Firma Berstorff mit einem Länge/Durchmesser-Verhältnis von 33 durchgeführt. Die dabei verwendeten Polymerisate a₂) wurden als Grieß oder Granulate dem Zweischneckenextruder zugeführt und dort mit der jeweils eingesetzten Bismaleinimidoverbindung b) und dem radikalischen Initiator aufgeschmolzen.

### Beispiel B'

100 Gew.-Teile eines Propylenpolymerisats a2) mit 59 Gew.-% Propylenhomopolymerisat, 41 Gew.-% Propylen-Ethylencopolymerisat [bestimmt durch Extraktionsfraktionierung nach W. Holtrup, Makromol. Chem. 178, 2335 (1977)], einem Ethylengehalt von 54,5 Gew.-%, bezogen auf die letztere Komponente [bestimmt durch Infrarotspektroskopie] und einem Schmelzflußindex von 3,5 g/10 min. [bei 230°C und 2,16 kg, nach DIN 53 735] wurden im Zweischneckenextruder mit 0,05 Gew.-Teilen 1,3-Bismaleinimidobenzol und 0,05 Gew.-Teilen 2,5-Dimethyl-2,5-di-(tert.-butylperoxy)hexan vermischt und granuliert. Die Temperatur betrug dabei 240°C, der Druck 10 bar und die mittlere Verweilzeit 30 Sekunden. Danach wurde das Gemisch aus dem Zweischneckenextruder ausgetragen und granuliert.

Der Schmelzflußindex, die Dehnung bei Streckspannung, die Reißdehnung und die Izod-Kerbschlagzähigkeit der dabei erhaltenen teilvernetzten Kunststoffmasse können der nachfolgenden Tabelle II entnommen werden.

### Beispiel B"

100 Gew.-Teile des im Beispiel B' verwendeten Propylenpolymerisats a₂) wurden unter den gleichen Bedingungen wie im Beispiel B' mit 0,2 Gew.-Teilen 1,3-Bismaleinimidobenzol und 0,08 Gew.-Teilen 2,5-Dimethyl-2,5-di(tert.-butyl-peroxy)-hexan vermischt und entsprechend aufgearbeitet.

Der Schmelzflußindex, die Dehnung bei Streckspannung, die Reißdehnung und die Izod-Kerbschlagzähigkeit der dabei erhaltenen teilvernetzten Kunststoffmasse können der nachfolgenden Tabelle II entnommen werden.

### Vergleichsbeispiel C

Unter den Bedingungen des Beispiels B' wurden 100 Gew.-Teile des im Beispiel B' verwendeten Propylenpolymerisats a₂) ohne Zusatz einer Bismaleinimidoverbindung b) und eines Peroxids aufgearbeitet. Der Schmelzflußindex, die Dehnung bei Streckspannung, die Reißdehnung und die Izod-Kerbschlagzähigkeit der dabei erhaltenen Kunststoffmasse können der nachfolgenden Tabelle II entnommen werden.

### Beispiel C'

100 Gew.-Teile eines Propylenpolymerisats a₂) aus 57 Gew.-% Propylenhomopolymerisat, 43 Gew.-% Propylen-Ethylencopolymerisat, einem Ethylengehalt von 56 Gew.-%, bezogen auf das Copolymerisat, und einem Schmelzflußindex von 10,6 g/10 min [bei 230°C und 2,16 kg, nach DIN 53 735] wurden mit 0,2 Gew.-Teilen 4,4'-Bismaleinimido-3,5,3',5'-tetramethyldiphenylmethan und 0,03 Gew.-Teilen 2,5-Dimethyl-2,5-di- (tert.-butylperoxy)hexan vermischt und unter den Bedingungen von Beispiel B' aufgearbeitet.

Der Schmelzflußindex, die Izod-Kerbschlagzähigkeit, die Dehnung bei Streckspannung und die Reißdehnung der dabei erhaltenen teilvernetzten Kunststoffmasse können der nachfolgenden Tabelle III entnommen werden.

### Vergleichsbeispiel D

Unter den Bedingungen von Beispiel C' wurden 100 Gew.-Teile des im Beispiel C' verwendeten Propylenpolymerisats a₂) ohne Zusatz einer Bismaleinimidoverbindung b) und eines Peroxides aufgearbeitet.

Der Schmelzflußindex, die Dehnung bei Streckspannung, die Reißdehnung und die Izod-Kerbschlagzähigkeit der dabei erhaltenen Kunststoffmasse können der nachfolgenden Tabelle III entnommen werden.

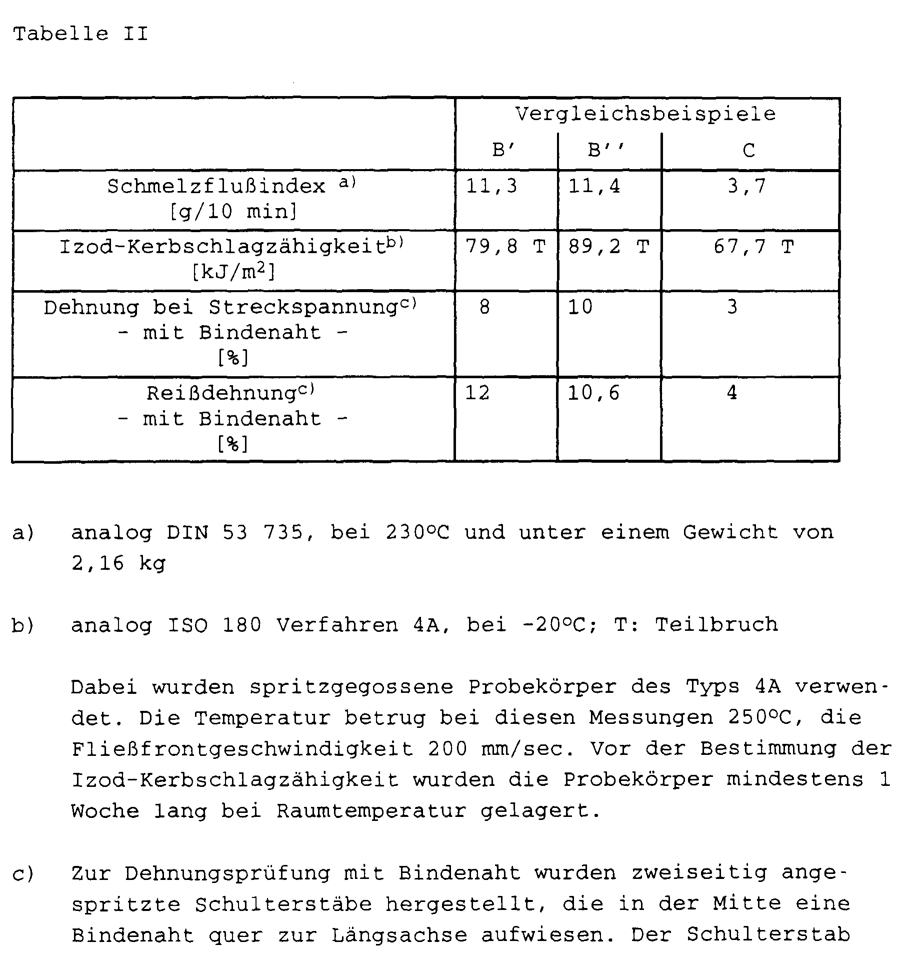

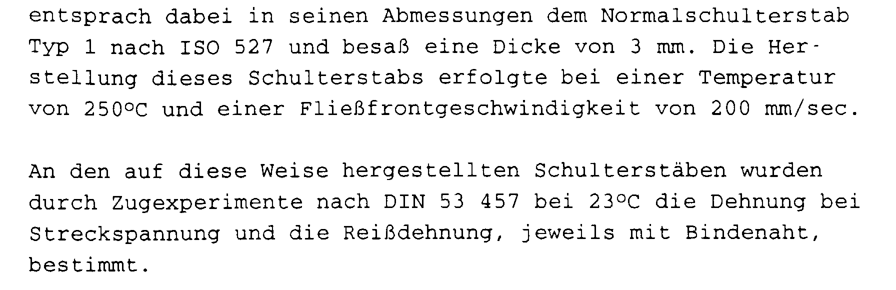

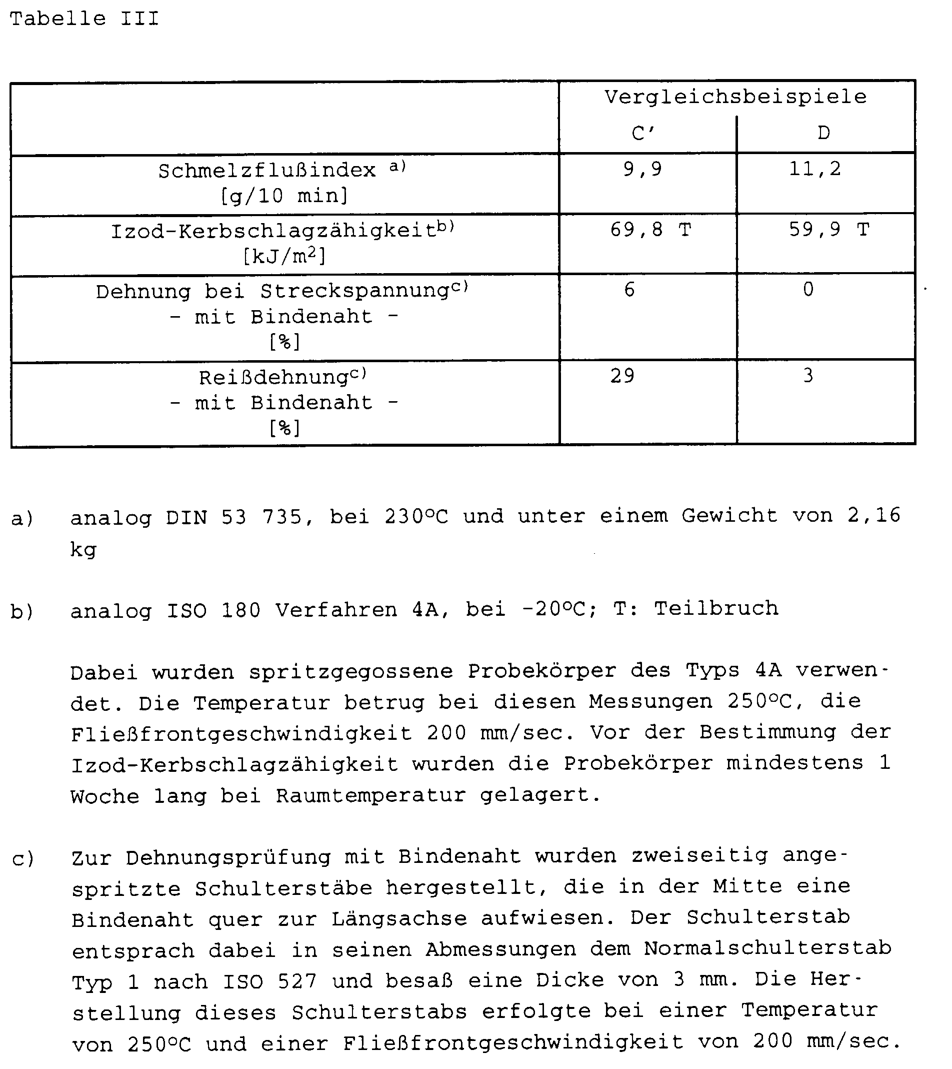

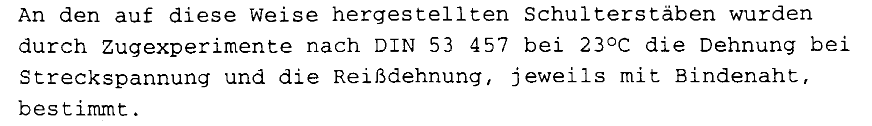

Die Vergleichsbeispiele D', D" und E wurden in einem Zweischneckenextruder der Firma Werner & Pfleiderer mit einem Länge/Durchmesser-Verhältnis von 30 durchgeführt. Die dabei verwendeten statistischen Propylencopolymerisate a₃) wurden als Grieß oder Granulat dem Zweischneckenextruder zugeführt und dort mit der Bismaleinimidoverbindung b), sowie beim Beispiel 10 mit einem radikalischen Initiator aufgeschmolzen.

### Beispiel D'

100 Gew.-Teile des im Beispiel D' verwendeten Propylencopolymerisats a₃) wurden bei einer Temperatur von 240°C, einem Druck von 20 bar und einer mittleren Verweilzeit von 30 Sekunden mit 0,2 Gew.-Teilen 1,3-Bismaleinimidobenzol und 0,02 Gew.-Teilen 2,5-Dimethyl-2,5-di(tert.-butyl-peroxy)hexan vermischt und entsprechend aufgearbeitet.

Der Schmelzflußindex der auf diese Weise erhaltenen teilvernetzten Kunststoffmasse kann der nachfolgenden Tabelle IV entnommen werden.

### Beispiel D"

100 Gew.-Teile eines Propylencopolymerisats a₃) mit einem Schmelzflußindex von 2 g/10 min, bei 230°C und 2,16 kg, nach DIN 53 735 und 2,5 Gew.-% einpolymerisiertem Ethylen wurden im Zweischneckenextruder mit 0,2 Gew.-Teilen 1,3-Bismaleinimidobenzol vermischt und granuliert. Die Temperatur betrug dabei 240°C, der Druck 20 bar und die mittlere Verweilzeit 30 Sekunden. Danach wurde das Gemisch aus dem Zweischneckenextruder ausgetragen und granuliert.

Der Schmelzflußindex der auf diese Weise erhaltenen teilvernetzten Kunststoffmasse kann der nachfolgenden Tabelle IV entnommen werden.

### Vergleichsbeispiel E

100 Gew.-Teile des im Beispiel D" verwendeten Propylencopolymerisats a₃) wurden unter den Bedingungen des Beispiels D" ohne Zusatz einer Bismaleinimidoverbindung b) aufgearbeitet.

Der Schmelzflußindex der auf diese Weise erhaltenen Kunststoffmasse kann der nachfolgenden Tabelle IV entnommen werden.

| | Vergleichsbeispiele | | |
|---|---|---|---|
| | D' | D" | E |
| Schmelzflußindex* [g/10 min] | 3,7 | 1,3 | 2,1 |

| | | | |
|---|---|---|---|
| *) nach DIN 53 735, bei 230°C und unter einem Gewicht von 2,16 kg | | | |

### Vergleichsbeispiel D'

Beim Vergleichsbeispiel D' wurde zusätzlich die Dehnverfestigung im Vergleich zu dem Produkt des Vergleichsbeispiels E gemessen. Die Untersuchung der Dehneigenschaften erfolgte dabei mit Hilfe eines bei der BASF Aktiengesellschaft entwickelten Dehnrheometers (H. Münstedt, J. Rheol. 23 (1979), 421-36). Dabei wurden zylindrische Proben mit einem Durchmesser von 6 mm und einer Länge von ca. 20 mm, die zwischen Aluminiumhalterungen eingebracht wurden, verstreckt. Die Versuche wurden bei einer konstanten Zugspannung δ von 1·10⁴ PA und einer Temperatur von 175°C durchgeführt. Auf diese Weise konnte die Dehnverfestigung gemessen werden.

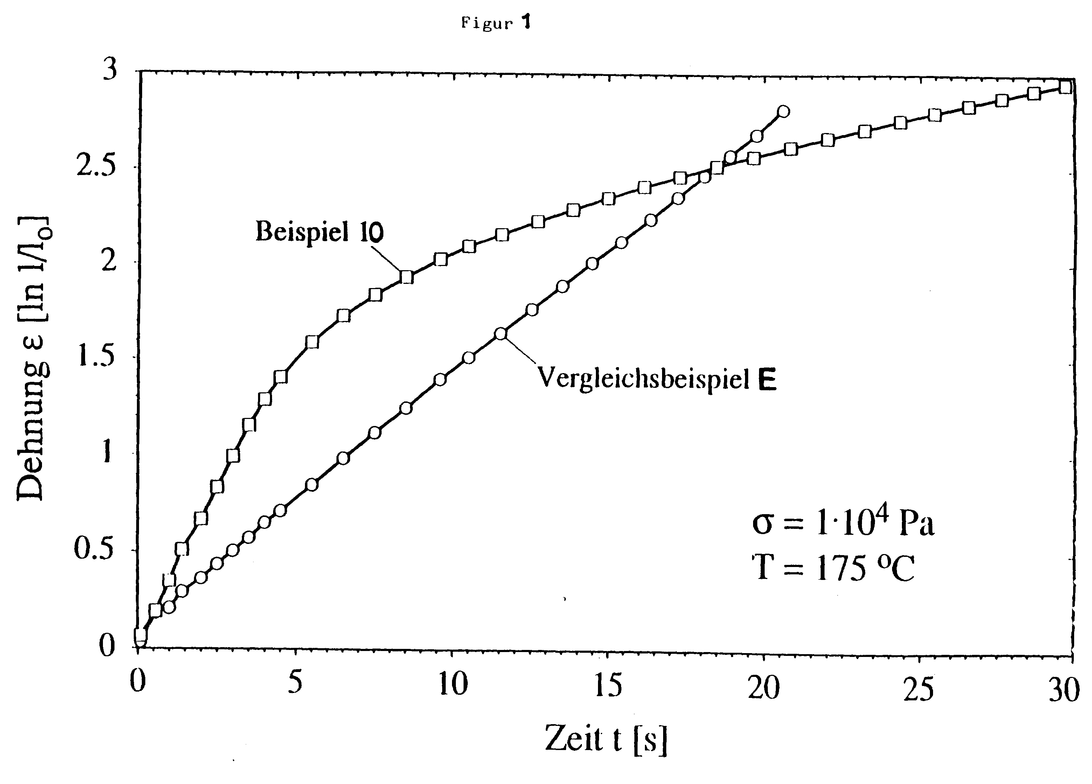

Wie aus der nachfolgenden Figur 1 hervorgeht, beobachtet man bei den teilvernetzten Proben des Vergleichsbeispiels D' im Bereich kleiner Dehnung zunächst einen starken Anstieg, der anschließend in eine deutliche Dehnverfestigung übergeht. Dagegen zeigt die unvernetzte Probe des Vergleichsbeispiels E über den gesamten Bereich der Dehnung einen nahezu linearen Verlauf.

Daraus folgt, daß das erfindungsgemäße Vergleichsbeispiel D' zu teilvernetzten Kunststoffmassen mit einer hohen Dehnverfestigung führt.
- Figur 1:: Vergleichsbeispiel D' und Vergleichsbeispiel E

Die Vergleichsbeispiele E', E" und F wurden in einem Zweischneckenextruder der Firma Berstorff mit einem Länge/Durchmesser-Verhältnis von 33 durchgeführt. Die dabei verwendeten Propylenhomopolymerisate a₄) wurden als Grieß oder Granulat dem Zweischneckenextruder zugeführt und dort mit der Bismaleinimidoverbindung b) und dem radikalischen Initiator aufgeschmolzen.

### Beispiel E'

100 Gew.-Teile eines Propylenhomopolymerisats a₄) mit einem Schmelzflußindex von 0,1 g/10 min, bei 230°C und 2,16 kg, nach DIN 53 735 wurden im Zweischneckenextruder mit 0,4 Gew.-Teilen 1,3-Bismaleinimidobenzol und 0,01 Gew.-Teilen 2,5-Dimethyl-2,5-di(tert.-butylperoxy)-hexan vermischt und granuliert. Die Temperatur betrug dabei 240°C, der Druck 10 bar und die mittlere Verweilzeit 30 Sekunden. Danach wurde das Gemisch aus dem Zweischneckenextruder ausgetragen und granuliert.

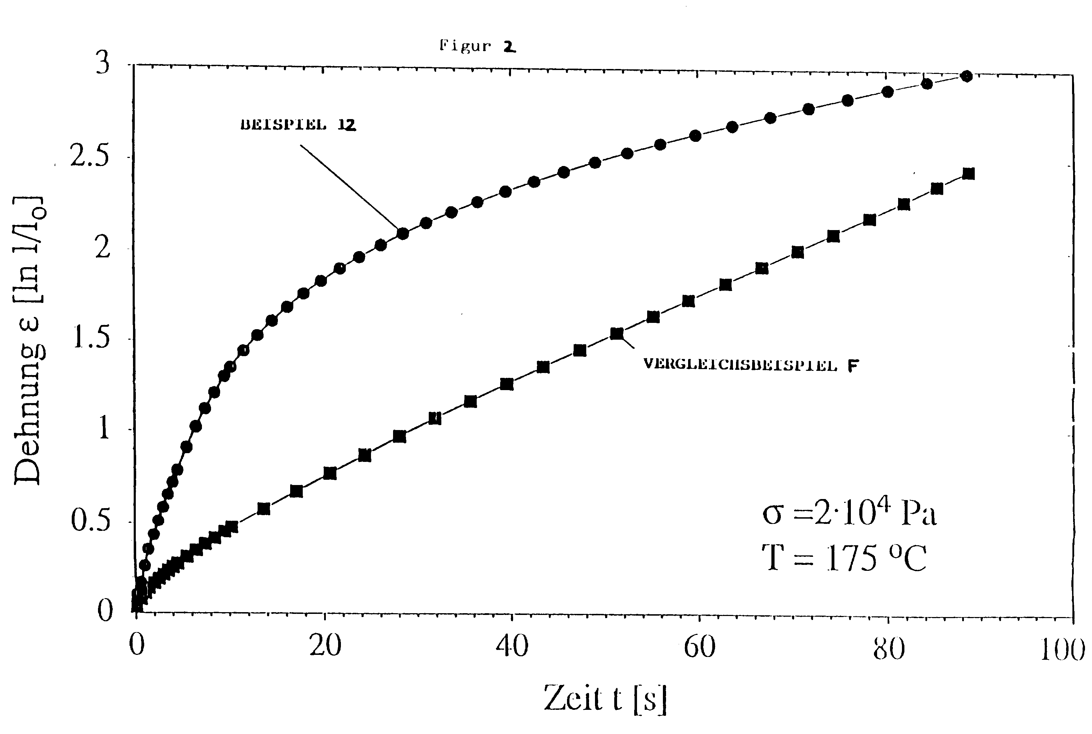

Der Schmelzflußindex und der DSC-Schmelzpunkt der dabei erhaltenen teilvernetzten Kunststoffmasse können der nachfolgenden Tabelle V entnommen werden. Die Dehnverfestigung der dabei erhaltenen teilvernetzten Kunststoffmasse im Vergleich zu Produkten aus dem Vergleichsbeispiel F ist in der nachfolgenden Figur 2 wiedergegeben.

### Beispiel 13

100 Gew.-Teile des im Beispiel 12 verwendeten Propylenhomopolymerisats a₄) wurden unter den gleichen Bedingungen wie im Beispiel 12 mit 0,4 Gew.-Teilen 1,3-Bismaleinimidobenzol und 0,02 Gew.-Teilen 2,5-Dimethyl-2,5-di(tert.-butyl-peroxy)hexan vermischt und entsprechend aufgearbeitet.

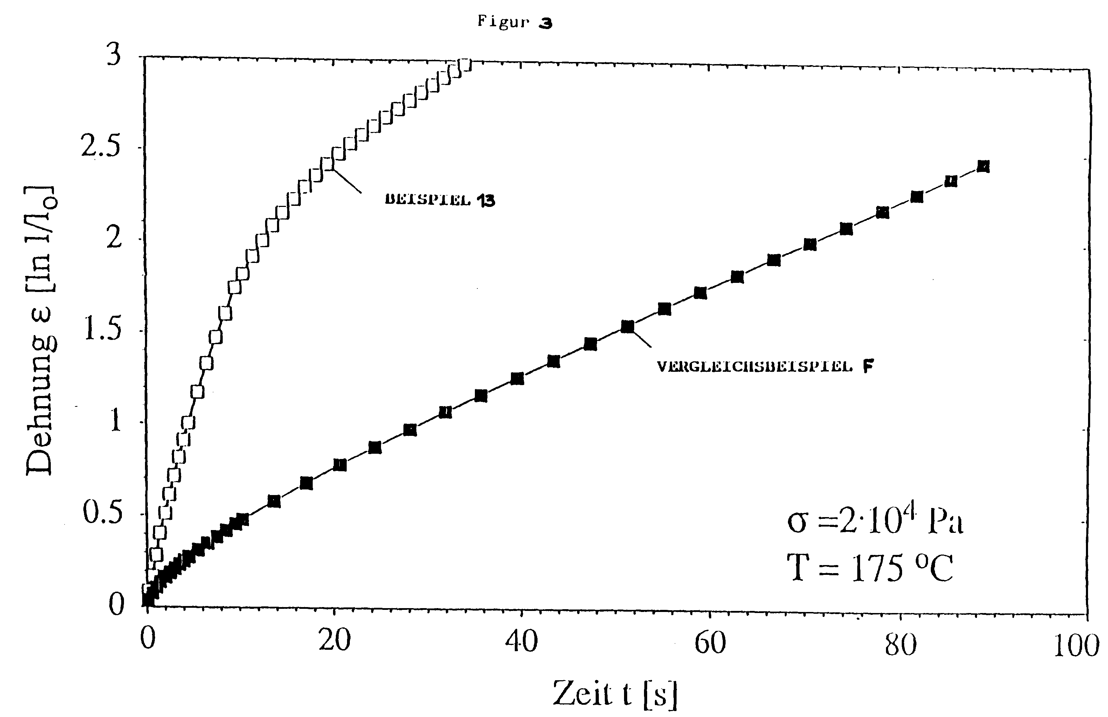

Der Schmelzflußindex und der DSC-Schmelzpunkt der dabei erhaltenen, teilvernetzten Kunststoffmasse können der nachfolgenden Tabelle entnommen werden. Die Dehnverfestigung im Vergleich zu Produkten aus dem Vergleichsbeispiel F ist in der nachfolgenden Figur 3 aufgeführt.

### Vergleichsbeispiel F

100 Gew.-Teile des im Beispiel 12 verwendeten Propylenhomopolymerisats a₄) wurden unter den Bedingungen des Beispiels E' ohne Zusatz einer Bismaleinimidoverbindung b) und eines Peroxids aufgearbeitet.

Der Schmelzflußindex und der DSC-Schmelzpunkt der dabei erhaltenen Kunststoffmasse können der nachfolgenden Tabelle entnommen werden. Die entsprechenden Werte für die Dehnverfestigung sind in den nachfolgenden Figuren 2 und 3 wiedergegeben.

**Tabelle V**

| | Vergleichsbeispiele | | |
|---|---|---|---|
| | E' | E" | F |
| Schmelzflußindex* [g/10 min] | 0,4 | 0,6 | 0,2 |
| DSC-Schmelzpunkt** [oC] | 164,3 | 164,6 | 134,5 |

| | | | |
|---|---|---|---|
| *) nach DIN 53 735, bei 230°C und unter einem Gewicht von 2,16 kg | | | |
| **) Schmelzpunkt bestimmt durch Differential Scanning Colorimetry | | | |

Die Untersuchung der Dehneigenschaften der Proben erfolgte in den Beispielen E' und E" sowie dem Vergleichsbeispiel F mit Hilfe eines bei der BASF Aktiengesellschaft entwickelten Dehnrheometers (H. Münstedt, J. Rheol. 23 (1979), 421-36).

Dabei wurden zylindrische Proben mit einem Durchmesser von 6 mm und einer Länge von ca. 20 mm, die zwischen Aluminiumhalterungen eingebracht wurden, verstreckt. Die Versuche wurden bei einer konstanten Zugspannung δ von 2·10⁴ Pa und einer Temperatur von 175°C durchgeführt. Auf diese Weise konnte die Dehnverfestigung gemessen werden.

Wie aus den Figuren 2 und 3 hervorgeht, beobachtet man bei den teilvernetzten Proben der Vergleichsbeispiele E'und E" im Bereich kleiner Dehnung zunächst einen steilen Anstieg, der anschließend in eine deutliche Dehnverfestigung übergeht. Dagegen zeigt die unvernetzte Probe des Vergleichsbeispiels F über den gesamten Bereich der Dehnung einen nahezu linearen Verlauf.

Daraus folgt, daß die erfindungsgemäßen Vergleichsbeispiele E'und E" zu teilvernetzten Kunststoffmassen mit einer hohen Dehnverfestigung führen.
- Figur 2:: Vergleichsbeispiele E'und F
- Figur 3:: Vergleichsbeispiele E" und F

## Patentansprüche

1. Teilvernetzte, glasfaserfreie Kunststoffmassen mit einem Schmelzflußindex von 0,1 bis 100 g/10 min., bei 230°C und unter einem Gewicht von 2,16 kg, aus
a) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist, und
b) einer Bismaleinimidoverbindung der allgemeinen Formel (I) 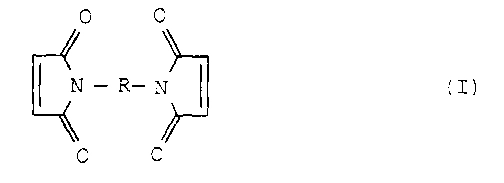 wobei R die folgende Bedeutung hat:
C₁-C₂₀-Alkyl, wobei der Alkylrest mit einem oder mehreren Sauerstoffatomen unterbrochen sein kann, C₅-C₇-Cycloalkyl, C₅-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel (II)
R¹-Z-R² (II)
wobei R¹ und R² jeweils unabhängig voneinander für C₁-C₁₀-Alkyl-, C₅-C₇-Cycloalkyl- oder C₆-C₁₀-Arylreste stehen, die ihrerseits jeweils mit einer oder mehrerer C₁-C₁₀-Alkyl- und/oder C₁-C₆-Alkoxy- und/oder C₁-C₄-Dialkylaminogruppen substituiert sein können und z eine C₁-C₁₀-Alkylgruppe, eine C₁-C₄-Dialkylaminogruppe, ein Sauerstoffatom oder eine Sulfongruppe bedeutet,
erhältlich durch Umsetzung des Polymerisats a) mit der Bismaleinimidoverbindung b) bei Temperaturen von 180 bis 280°C, Drücken von 1 bis 100 bar und mittleren Verweilzeiten des Reaktionsgemisches von 0,2 bis 10 Minuten.

2. Teilvernetzte Kunststoffmassen nach Anspruch 1, erhältlich durch Umsetzung des Polymerisats a) mit der Bismaleinimidoverbindung b) in Anwesenheit eines radikalisch zerfallenden Initiators.

3. Teilvernetzte Kunststoffmassen nach den Ansprüchen 1 oder 2, wobei man pro 100 Gew.-Teile des Polymerisats a) 0,001 bis 5,0 Gew.-Teile der Bismaleinimidoverbindung b) und 0 bis 2 Gew.-Teile des radikalisch zerfallenden Initiators verwendet.

4. Teilvernetzte Kunststoffmassen nach den Ansprüchen 1 bis 3, wobei als Bismaleinimidoverbindung b) Verbindungen der allgemeinen Formel (I) verwendet werden, in der R die folgende Bedeutung hat:
C₂-C₁₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₄-Alkylgruppen substituiert sein kann, sowie einen Rest der Formel (II) R¹-Z-R², wobei R¹ und R² jeweils unabhängig voneinander für C₁-C₆-Alkyl-, C₅-C₇-Cycloalkyl- oder C₆-C₁₀-Arylreste stehen, und Z ein Sauerstoffatom oder eine Sulfongruppe bedeutet.

5. Teilvernetzte Kunststoffmassen nach den Ansprüchen 1 bis 4, wobei als Bismaleinimidoverbindungen b) 1,3-Bismaleinimidohexan, 1,3-Bismaleinimidobenzol, 1,3-Bismaleinimido-4-methylbenzol, 4,4'-Bismaleinimidodiphenylmethan, 4,4'-Bismaleinimido-3,5,3'5'-tetramethyldiphenylmethan oder 3,3'-Bismaleinimidodiphenylsulfon verwendet werden.

6. Teilvernetzte Kunststoffmassen nach den Ansprüchen 2 bis 5, wobei als radikalisch zerfallende Initiatoren organische Peroxide oder Azoverbindungen verwendet werden.

7. Verfahren zur Herstellung von teilvernetzten Kunststoffmassen gemäß den Ansprüchen 1 bis 6, dadurch gekennzeichnet, daß man die Umsetzung des Polymerisats a) mit der Bismaleinimidoverbindung b) bei Temperaturen von 190 bis 260°C, Drücken von 1 bis 60 bar und mittleren Verweilzeiten des Reaktionsgemisches von 0,2 bis 5 Minuten durchführt.

8. Verfahren zur Herstellung von teilvernetzten Kunststoffmassen nach Anspruch 7, dadurch gekennzeichnet, daß man die Bismaleinimidoverbindung b) mit dem Polymerisat a) unmittelbar nach dessen Herstellung in einer, an den Herstellungsreaktor angeschlossenen Mischapparatur umsetzt.

9. Folien und Formkörper aus den teilvernetzten Kunststoffmassen gemäß den Ansprüchen 1 bis 6.

## Claims

1. A partially crosslinked, glass fiber-free plastics material having a melt flow index of from 0.1 to 100 g/10 min at 230°C and under a weight of 2.16 kg and consisting of
a) a polymer of from 25 to 97% by weight of a propylene copolymer (I), which contains from 0.1 to 15% by weight of polymerized C₂-C₁₀-alk-1-enes, and of from 3 to 75% by weight of a further propylene copolymer (II) which contains from 15 to 80% by weight of polymerized C₂-C₁₀-alk-1-enes and
b) a bismaleimido compound of the formula (I) 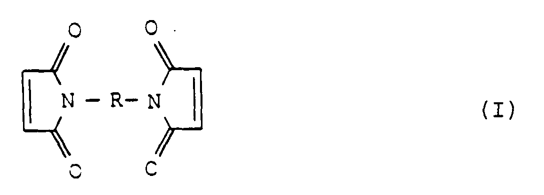 where R is C₁-C₂₀-alkyl which may be interrupted by one or more oxygen atoms, or is C₅-C₇-cycloalkyl or C₆-C₁₅-aryl, each of which may in turn be substituted by one or more C₁-C₁₀-alkyl or C₁-C₆-alkoxy or C₁-C₄-dialkylamino groups, or is a radical of the following formula (II)
R¹-Z-R² (II)
where R¹ and R² independently of one another are each C₁-C₁₀-alkyl, C₅-C₇-cycloalkyl or C₆-C₁₀-aryl, each of which in turn may be substituted by one or more C₁-C₁₀-alkyl or C₁-C₆-alkoxy or C₁-C₄-dialkylamino groups, and Z is C₁-C₁₀-alkyl, C₁-C₄-dialkylamino, oxygen or sulfonyl,
obtainable by reacting the polymer a) with the bismaleimido compound b) at from 180 to 280°C and from 1 to 100 bar and in an average residence time of the reaction mixture of from 0.2 to 10 minutes.

2. A partially crosslinked plastics material as claimed in claim 1, obtainable by reacting the polymer a) with the bismaleimido compound b) in the presence of a free radical initiator.

3. A partially crosslinked plastics material as claimed in claim 1 or 2, wherein from 0.001 to 5.0 parts by weight of the bismaleimido compound b) and from 0 to 2 parts by weight of the free radical initiator are used per 100 parts by weight of polymer a).

4. A partially crosslinked plastics material as claimed in any of claims 1 to 3, wherein the bismaleimido compound b) used is a compound of the formula (I), where R is C₂-C₁₀-alkyl which may be interrupted by one or more oxygen atoms, or is C₅-C₇-cycloalkyl or C₆-C₁₅-aryl, each of which in turn may be substituted by one or more C₁-C₄-alkyl groups, or is a radical of the formula (II) R¹-Z-R², where R¹ and R² independently of one another are each C₁-C₆-alkyl, C₅-C₇-cycloalkyl or C₆-C₁₀-aryl, and Z is oxygen or sulfonyl.

5. A partially crosslinked plastics material as claimed in any of claims 1 to 4, wherein the bismaleimido compound b) is 1,3-bismaleimidohexane, 1,3-bismaleimidobenzene, 1,3-bismaleimido-4-methylbenzene, 4,4'-bismaleimidodiphenylmethane, 4,4'-bismaleimido-3,5,3',5'-tetramethyldiphenylmethane or 3,3'-bismaleimidodiphenyl sulfone.

6. A partially crosslinked plastics material as claimed in any of claims 2 to 5, wherein the free radical initiators used are organic peroxides or azo compounds.

7. A process for the preparation of a partially crosslinked plastics material as claimed in any of claims 1 to 6, wherein the reaction of the polymer a) with the bismaleimido compound b) is carried out at from 190 to 260°C and from 1 to 60 bar and in an average residence time of the reaction mixture of from 0.2 to 5 minutes.

8. A process for the preparation of a partially crosslinked plastics material as claimed in claim 7, wherein the bismaleimido compound b) is reacted with the polymer a) immediately after its preparation in a mixing apparatus connected to the preparation reactor.

9. A film or molding of a partially crosslinked plastics material as claimed in any of claims 1 to 6.

## Revendications

1. Masses de résines synthétiques partiellement réticulées, exemptes de fibres de verre, à un indice d'écoulement à l'état fondu de 0,1 à 100 g/10 minutes à 230° C sous un poids de 2,16 kg, obtenues à partir de
a) un polymère consistant en 25 à 97 % en poids d'un copolymère du propylène I contenant 0,1 à 15 % en poids d'alcènes-1 en C2-C10 à l'état polymérisé et 3 à 75 % en poids d'un autre copolymère du propylène II contenant 15 à 80 % en poids d'alcènes-1 en C2-C10 à l'état polymérisé, et
b) un bis-maléimide de formule générale I 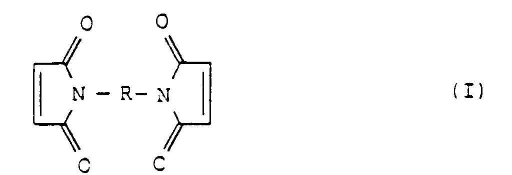 dans laquelle R a la signification suivante :
un groupe alkyle en C1-C20 qui peut être interrompu par un ou plusieurs atomes d'oxygène, cycloalkyle en C5-C7, aryle en C6-C15, les groupes cycloalkyle et aryle pouvant eux-mêmes porter un ou plusieurs substituants alkyle en C1-C10 et/ou alcoxy en C1-C6 et/ou di-(alkyle en C1-C4)amino, ou un groupe de formule II
R¹-Z-R² (II)
dans laquelle R¹ et R² représentent chacun, indépendamment l'un de l'autre, un groupe alkyle en C1-C10, cycloalkyle en C5-C7 ou aryle en C6-C10, chacun d'eux pouvant porter un ou plusieurs substituants alkyle en C1-C10 et/ou alcoxy en C1-C6 et/ou di-(alkyle en C1-C4)amino,
et Z représente un groupe alkyle en C1-C10, un groupe di-(alkyle en C1-C4)-amino, un atome d'oxygène ou un groupe sulfone,
par réaction du polymère a) avec le bis-maléimide b) à des températures de 180 à 280°C sous des pressions de 1 à 100 bar dans des durées de réaction de 0,2 à 10 minutes.

2. Masses de résines synthétiques partiellement réticulées selon la revendicaiton 1, obtenues par réaction du polymère a) avec le bis-maléimide b) en présence d'un inducteur radicalaire.

3. Masses de résines synthétiques partiellement réticulées selon la revendication 1 ou 2, obtenues à partir de 100 parties en poids du polymère a), 0,001 à 5,0 parties en poids du bis-maléimide b) et 0 à 2 parties en poids de l'inducteur radicalaire.

4. Masses de résines synthétiques partiellement réticulées selon les revendications 1 à 3, pour lesquelles le bis-maléimide b) est un composé de formule générale I dans laquelle R a les significations suivantes :
un groupe alkyle en C2-C10, qui peut être interrompu par un ou plusieurs atomes d'oxygène, un groupe cycloalkyle en C5-C7, aryle en C6-C15, qui peuvent chacun porter un ou plusieurs substituants alkyle en C1-C4, ou un groupe de formule II R¹-Z-R² dans laquelle R¹ et R² représentent chacun, indépendamment l'un de l'autre, un groupe alkyle en C1-C6, cycloalkyle en C2-C7 ou aryle en C6-C10 et Z représente un atome d'oxygène ou un groupe sulfone.

5. Masses de résines synthétiques partiellement réticulées selon les revendications 1 à 4, pour lesquelles le bis-maléimide b) est le 1,3-maléimidohexane, le 1,3-bis-maléimidobenzène, le 1,3-bis-maléimido-4-méthylbenzène, le 4,4'-bis-maléimidodiphénylméthane, le 4,4'-bismaléimido-3,5,3',5'-tétraméthyldiphénylméthane ou la 3,3'-bismaléimidodiphénylsulfone.

6. Masses de résines synthétiques partiellement réticulées selon les revendications 2 à 5, obtenues en utilisant en tant qu'inducteurs radicalaires des peroxydes organiques ou des dérivés azoïques.

7. Procédé de préparation des masses de résines synthétiques partiellement réticulées selon les revendications 1 à 6, caractérisé par le fait que l'on fait réagir le polymère a) avec le bis-maléimide b) à des températures de 190 à 260°C sous des pressions de 1 à 60 bar et avec des durées de réaction moyennes de 0,2 à 5 minutes.

8. Procédé de préparation des masses de résines synthétiques partiellement réticulées selon la revendication 7, caractérisé par le fait que l'on fait réagir le bis-maléimide b) avec le polymère a) immédiatement après la préparation de ce dernier dans un appareil de mélange placé après le réacteur de préparation.

9. Feuilles et corps moulés consistant en les masses de résines synthétiques partiellement réticulées selon les revendications 1 à 6.
